# DEMANDE DE BREVET EUROPEEN

(11) **EP 4 414 677 A1**
(43) Date de publication de la demande: **14.08.2024**
(21) Numéro de dépôt: 24156094.5
(22) Date de dépôt: 06.02.2024
(51) Int. Cl.: G01L 3/10, G01L 3/14

(54) **SYSTÈME DE DÉTERMINATION D'UN COUPLE APPLIQUÉ ENTRE DEUX ORGANES TOURNANTS**

(30) Priorité: 09.02.2023 FR 2301225
(71) Demandeur: NTN Europe, 74000 Annecy (FR)
(72) Inventeur: BAUDU, Alexandre, 74010 Annecy Cedex (FR); RUHLAND, Siegfried, 74010 Annecy Cedex (FR)
(74) Mandataire: Sayettat, Julien Christian

(57) **Abrégé**

L'invention concerne un système de détermination d'un couple appliqué entre deux organes tournants, ledit système comprenant un corps d'épreuve présentant une bague intérieure (5) et une bague extérieure (6) reliées de façon concentrique par une structure déformable, et un dispositif de détermination d'un angle entre les bagues (5, 6) qui est fonction du couple appliqué, la structure déformable comprenant un ensemble de branches (19) réparties angulairement entre les bagues (5, 6), chacune desdites branches s'étendant suivant une direction entre une extrémité intérieure et une extrémité extérieure, ladite direction formant un angle avec la direction diamétrale passant par ladite extrémité intérieure, chacune desdites branches présentant une section de pied s'étendant depuis l'extrémité intérieure jusqu'à ladite direction et une section de tête s'étendant depuis ladite direction jusqu'à l'extrémité extérieure, lesdites sections formant un coude respectivement convexe (20) pour la section de pied et concave (21) pour la section de tête.

## Description

L'invention concerne un système de détermination d'un couple appliqué entre deux organes tournants dans un sens autour d'un axe géométrique de rotation.

Les organes peuvent notamment être intégrés dans une transmission d'un couple moteur à un véhicule, par exemple entre le moteur électrique ou le pédalier et la transmission mécanique d'un vélo à assistance électrique.

Pour ce faire, il est connu d'utiliser un corps d'épreuve présentant une bague intérieure solidaire en rotation de moyens d'accouplement dudit corps d'épreuve à un premier des organes, et une bague extérieure s'étendant autour de la bague intérieure en présentant des moyens d'accouplement dudit corps d'épreuve au deuxième des organes, lesdites bagues étant reliées de façon concentrique autour de l'axe de rotation par une structure déformable qui est agencée pour transmettre le couple entre les organes tout en autorisant un débattement angulaire entre lesdites bagues en fonction du couple appliqué entre les organes.

Un tel corps d'épreuve peut être instrumenté avec un codeur en équipant chacune des bagues d'un anneau portant une piste magnétique respectivement intérieure et extérieure qui est apte à émettre un signal périodique représentatif du déplacement en rotation de la bague correspondante. En particulier, chacune des pistes présente une succession de paires de pôles Nord et Sud pour former une piste magnétique multipolaire délivrant un signal magnétique pseudo-sinusoïdal.

Le système de détermination comprend alors un capteur présentant un premier - respectivement un deuxième - motif d'éléments sensibles disposé à distance de lecture de la piste intérieure - respectivement de la piste extérieure - pour former un signal représentatif de la position angulaire de l'anneau correspondant.

Les documents FR-2 816 051, FR-2 821 931 et FR-2 862 382 décrivent l'utilisation d'un dispositif de comparaison de tels signaux qui est apte à déterminer un écart angulaire entre les portions, et donc le couple appliqué en ce qu'il induit ledit angle par torsion de la structure déformable.

Dans certaines applications, notamment en relation avec la transmission d'un vélo à assistance électrique, la place disponible pour l'implantation du corps d'épreuve est fortement limitée. Il en résulte la nécessité de concevoir des corps d'épreuve d'encombrement réduit, notamment radialement, ce qui contraint d'autant plus la réalisation de la structure déformable.

Cette contrainte est d'autant plus critique que la déformation de la structure doit être limitée pour éviter de ressentir l'angle de torsion dans la transmission, tout en étant extrêmement fiable tant relativement au débattement angulaire induit qu'au niveau de sa résistance mécanique. En particulier, la structure déformable peut avoir à subir un débattement de l'ordre de quelques degrés d'angle tout en résistant à un couple de l'ordre de 250 Nm.

L'invention a pour but d'améliorer l'art antérieur en proposant notamment un système dont le corps d'épreuve est compact tout en étant résistant mécaniquement et fiable relativement à l'angle de débattement permettant de déterminer le couple appliqué.

A cet effet, l'invention propose un système de détermination d'un couple appliqué entre deux organes tournants dans un sens autour d'un axe géométrique de rotation, ledit système comprenant :
- un corps d'épreuve présentant une bague intérieure solidaire en rotation de moyens d'accouplement dudit corps d'épreuve à un premier des organes, et une bague extérieure s'étendant autour de la bague intérieure en présentant des moyens d'accouplement dudit corps d'épreuve au deuxième des organes, lesdites bagues étant reliées de façon concentrique autour de l'axe par une structure déformable qui est agencée pour transmettre le couple entre les organes tout en autorisant un débattement angulaire entre lesdites bagues en fonction du couple appliqué entre lesdits organes ;
- un dispositif de détermination d'un angle entre les bagues qui est fonction du couple appliqué ;
la structure déformable comprenant un ensemble de branches réparties angulairement entre les bagues, chacune desdites branches s'étendant suivant une direction D entre une extrémité intérieure et une extrémité extérieure, ladite direction D formant un angle INCb avec la direction diamétrale D_{d} passant par ladite extrémité intérieure, chacune desdites branches présentant une section de pied s'étendant depuis l'extrémité intérieure jusqu'à la direction D et une section de tête s'étendant depuis ladite direction D jusqu'à l'extrémité extérieure, lesdites sections formant un coude respectivement convexe pour la section de pied et concave pour la section de tête.

D'autres objets et avantages de l'invention apparaîtront dans la description qui suit, faite en référence aux figures annexées, dans lesquelles :
[Fig.1] est une représentation partielle en perspective coupée transversalement du pédalier d'un vélo à assistance électrique équipé d'un système de détermination de couple selon l'invention,
[Fig.1a] étant un zoom éclaté de la figure 1 montrant plus particulièrement le montage du corps d'épreuve,
[Fig.1b] étant une vue en coupe longitudinale de la figure 1a ;
[Fig.2] est une représentation en perspective de dessus du corps d'épreuve de la figure 1,
[Fig.2a] étant une vue de face dudit corps d'épreuve dépourvu de codeur,
[Fig.2b] étant une vue en coupe longitudinale de la figure 2a ;
[Fig.3] étant une vue en perspective de la figure 2a dans laquelle la noix a été enlevée,
[Fig.3a] est une vue de face de la figure 3 ;
[Fig.4] représente de face une branche dans le corps d'épreuve de la figure 3a ;
[Fig.5] et
[Fig.6] sont des représentations de face d'un corps d'épreuve selon respectivement une variante de réalisation de l'invention.

En relation avec ces figures, on décrit ci-dessous un système de détermination d'un couple appliqué entre deux organes tournants 1, 2 dans un sens autour d'un axe géométrique de rotation R.

Dans cette description, les termes de positionnement dans l'espace sont pris en référence à l'axe R de rotation. En particulier, les termes « intérieur » et « extérieur » sont relatifs à une disposition respectivement proche et à distance de cet axe R, et les termes « axial » et « radial » sont relatifs à une disposition respectivement suivant cet axe R et s'éloignant ou se rapprochant de lui.

En particulier, le système permet la détermination d'un couple appliqué entre deux organes 1, 2 intégrés dans une transmission d'un couple moteur à un véhicule, par exemple entre le moteur électrique ou le pédalier et la transmission mécanique d'un vélo à assistance électrique.

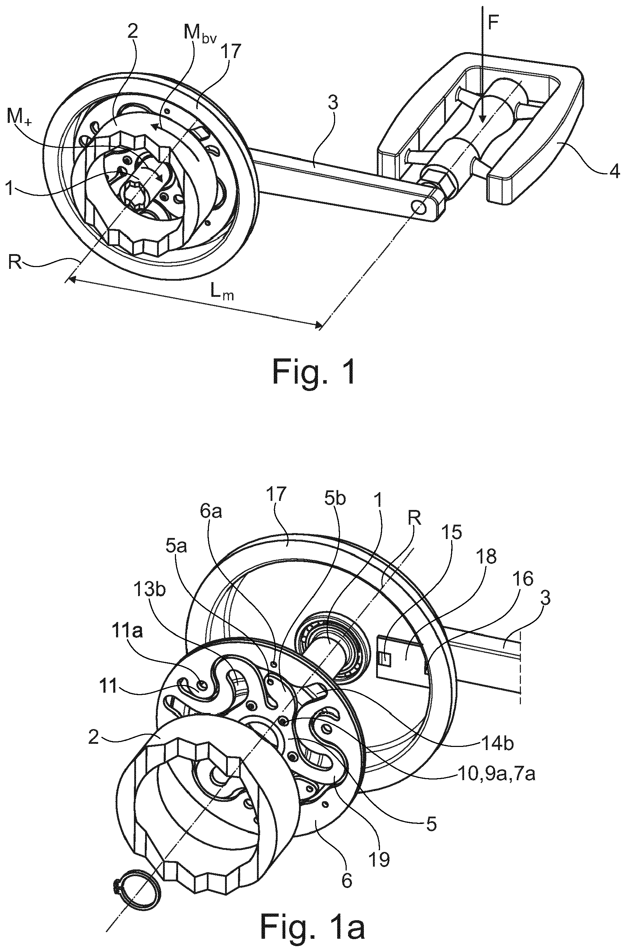

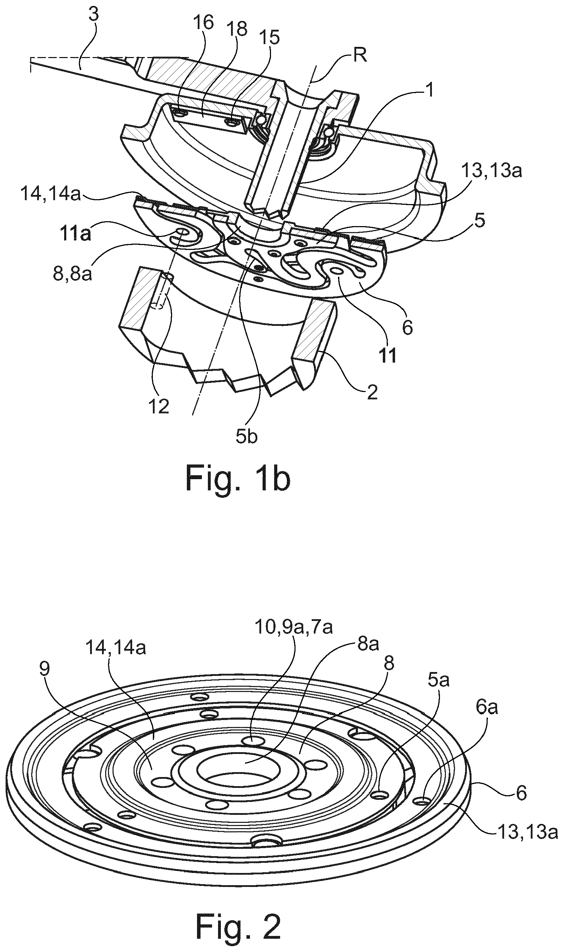

La figure 1 représente un pédalier d'un vélo à assistance électrique comprenant une manivelle 3 équipée d'une pédale 4, ladite manivelle étant montée sur un arbre entraîné en rotation selon l'axe R pour former un organe 1 d'application d'un couple de pédalage M+ suivant le sens de pédalage.

Le système comprend un corps d'épreuve qui permet de transmettre le couple de pédalage M+ à l'autre des organes 2, qui, sur les figures, est représenté sous la forme d'un manchon, par exemple d'un porte satellite d'un train épicycloïdal d'une boîte de vitesse motorisée, exerçant un couple Mbv.

Dans cette application, l'effort de pédalage F en bout de pédale 4 à considérer suivant la norme EN15194 : 2017 est de 1 500 N qui, avec une longueur Lm de manivelle de 165 mm, engendre un couple M+ de l'ordre de 250 Nm. En particulier, le couple à transmettre par le corps d'épreuve n'est que dans un sens de rotation (celui représenté M+ sur les figures), dans la mesure où l'autre sens correspond à la roue libre du vélo.

Le corps d'épreuve présente une bague intérieure 5 solidaire en rotation de moyens d'accouplement dudit corps d'épreuve au premier organe 1, et une bague extérieure 6 s'étendant autour de la bague intérieure 5 en présentant des moyens d'accouplement dudit corps d'épreuve au deuxième organe 2.

En relation avec les figures, la bague intérieure 5 présente un alésage 7 équipé des moyens d'accouplement sur l'arbre, par exemple sous la forme d'un taraudage ou de cannelures.

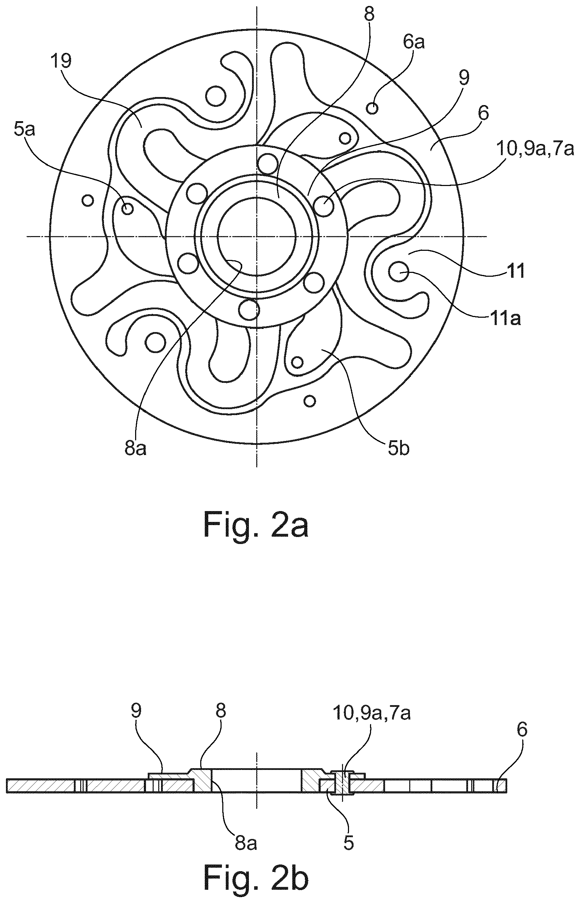

En relation avec les figures 1 à 5, une noix 8 d'accouplement du corps d'épreuve avec le premier organe 1 est rapportée en étant fixée dans l'alésage 7, ladite noix 8 présentant un alésage 8a permettant l'accouplement, par exemple en étant équipé d'un taraudage ou de cannelures.

Dans le mode de réalisation représenté, la noix 8 est maintenue dans l'alésage 7 par rivetage. Pour ce faire, la noix 8 présente une bride 9 dans laquelle des orifices 9a sont formés, le bord de l'alésage 7 étant pourvu d'orifices complémentaires 7a permettant le rivetage de ladite noix au moyen de rivets 10.

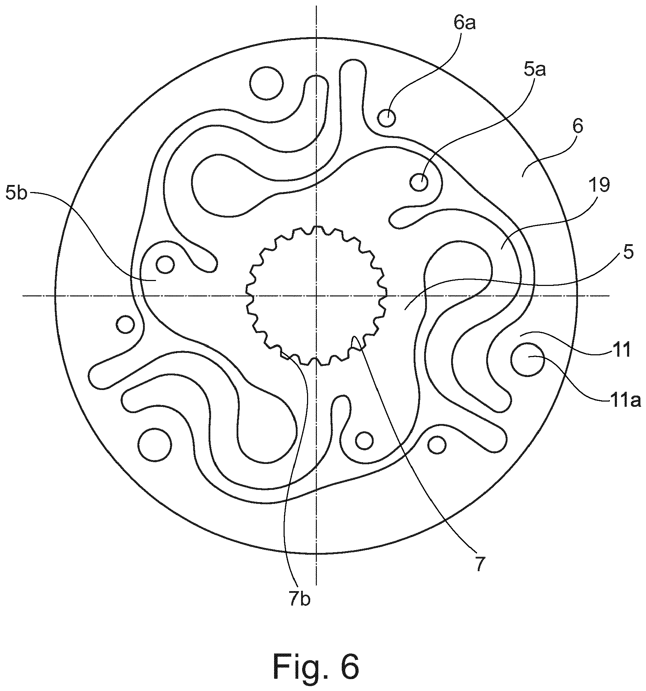

En relation avec la figure 6, l'alésage 7 est directement pourvu de cannelures 7b d'accouplement avec l'arbre du premier organe 1.

S'agissant de l'accouplement à l'autre organe 2, les modes de réalisation représentés prévoient que la bague extérieure 6 présente au moins un lobe radial 11 qui est équipé d'un moyen de fixation de ladite bague extérieure sur le manchon. En particulier, trois lobes 11 à 120° sont prévus, chacun d'eux présentant un orifice 11a de fixation par une goupille 12 ou par vissage dans un orifice complémentaire du manchon. En variante, la bague extérieure 6, notamment sa périphérie, peut présenter des moyens géométriques d'engrenage avec le deuxième organe 2.

Les bagues 5, 6 sont reliées de façon concentrique autour de l'axe R par une structure déformable qui est agencée pour transmettre le couple entre les organes 1, 2 tout en autorisant un débattement angulaire entre lesdites bagues en fonction du couple appliqué entre lesdits organes.

En particulier, le couple résultant du couple de pédale M+ appliqué sur la bague intérieure 5 et du couple Mbv appliqué par le manchon sur la bague extérieure 6 induit une torsion entre les bagues 5, 6 et donc un déplacement angulaire relatif desdites bagues suivant un angle de torsion qui est fonction dudit couple.

Le système comprend un dispositif de détermination de l'angle entre les bagues 5, 6 qui, notamment en tenant compte de la raideur de la structure déformable, est fonction du couple appliqué.

Selon une réalisation, le dispositif de détermination comprend :
- un codeur réalisé en équipant chacune des bagues 5, 6 d'un anneau 13, 14 portant une piste magnétique respectivement intérieure 13a et extérieure 14a qui est apte à émettre un signal périodique représentatif du déplacement en rotation de la bague 5, 6 correspondante ;
- un capteur comprenant un premier 15 - respectivement un deuxième 16 - motif d'éléments sensibles disposé à distance de lecture de la piste intérieure 13a - respectivement de la piste extérieure 14a - pour former un signal représentatif de la position angulaire de l'anneau 13, 14 correspondant ;
- un dispositif de comparaison des signaux délivrés par le capteur, ledit dispositif étant apte à déterminer un angle entre les bagues 5, 6 qui est fonction du couple appliqué.

En relation avec les figures, l'axe du pédalier est monté en rotation dans un carter 17 sur lequel le capteur est implanté avec les motifs 15, 16 à distance de lecture des pistes 13a, 14a correspondantes.

Selon une réalisation, chacun des anneaux 13, 14 est porté par une armature respectivement intérieure 13b et extérieure 14b, la bague intérieure 5 - respectivement extérieure 6 - présentant des moyens de fixation de l'armature intérieure 13b - respectivement extérieure 14b - sur elle.

En particulier, chacune des bagues 5, 6 présente des orifices 5a, 6a de fixation des armatures 13b, 14b, notamment par vissage ou rivetage. En relation avec les figures, trois orifices 5a, 6a de fixation sont disposés à 120° les uns des autres.

Selon une réalisation, une succession de paires de pôles Nord et Sud est aimantée sur respectivement un anneau 13, 14 pour former une piste magnétique multipolaire 13a, 14a apte à émettre un signal magnétique de forme pseudo-sinusoïdale.

Les anneaux 13, 14 peuvent comprendre une matrice annulaire, par exemple réalisée à base d'un matériau plastique ou élastomère, dans laquelle sont dispersées des particules magnétiques, notamment des particules de ferrite ou de terres rares comme le NdFeB, lesdites particules étant aimantées pour former les pistes magnétiques 13a, 14a.

Chaque motif 15, 16 peut comprendre au moins deux éléments sensibles, notamment une pluralité d'éléments sensibles alignés, tel que décrit dans les documents FR-2 792 403, EP-2 602 593 et EP-2 602 594.

Les éléments sensibles peuvent être à base d'un matériau magnétorésistif dont la résistance varie en fonction du signal magnétique de la piste 13a, 14a à détecter, par exemple de type AMR, TMR ou GMR, ou d'une sonde à effet Hall.

Selon une réalisation, la position angulaire peut être déterminée de façon incrémentale au moyen du signal émis par une piste magnétique 13a, 14a. Selon une autre réalisation, la position angulaire peut être déterminée de façon absolue, c'est-à-dire par rapport à une position de référence, en prévoyant une piste magnétique secondaire ou un codage spécifique sur l'anneau 13, 14.

Le système comprend en outre un dispositif de comparaison des signaux délivrés par le capteur, ledit dispositif étant apte à déterminer un angle entre les bagues 5, 6 qui est fonction du couple appliqué. En relation avec les figures, le capteur comprend une carte 18 sur laquelle les motifs 15, 16 d'éléments sensibles sont implantés dans un circuit électronique.

Selon une réalisation, les capteurs délivrent des signaux carrés incrémentaux en quadrature, le dispositif de comparaison comprenant des moyens de comptage indiquant la position angulaire de chacun des anneaux 13, 14 et des moyens de soustraction permettant de calculer la différence entre lesdites positions angulaires, notamment tels que décrit dans les documents FR-2 816 051, FR-2 821 931 et FR-2 862 382.

La structure déformable comprend un ensemble de branches 19 réparties angulairement entre les bagues 5, 6. En particulier, les branches 19 et les bagues 5, 6 sont formées d'une seule pièce, par exemple par découpe avec une machine à fil ou par emboutissage d'un flan en matériau métallique.

Chacune des branches 19 s'étend suivant une direction D entre une extrémité intérieure 19a et une extrémité extérieure 19b, ladite direction formant un angle INCb avec la direction diamétrale D_{d} passant par ladite extrémité intérieure, chacune desdites branches présentant une section de pied Sₚ s'étendant depuis l'extrémité intérieure 19a jusqu'à la direction D et une section de tête Sₜ s'étendant depuis ladite direction D jusqu'à l'extrémité extérieure 19b, lesdites sections formant un coude respectivement convexe 20 pour la section de pied Sₚ et concave 21 pour la section de tête Sc.

Comme représenté sur les figures, pour un couple M+ appliqué sur la bague intérieure 5 dans un sens antihoraire, les branches 19 sont inclinées à droite. Le choix de l'angle d'inclinaison INCb dépend du couple maximum à transmettre et de la largeur des branches 19.

L'inclinaison des branches 19 en combinaison avec leur conformation géométrique en forme de S avec deux coudes 20, 21 permet de satisfaire à la contrainte d'encombrement radial du corps d'épreuve, par exemple en relation avec une bague extérieure 6 de rayon REXT inférieur à 50 mm, tout en augmentant la longueur LGb des branches 19 afin de réduire leur raideur, notamment en maximisant l'amplitude des coudes 20, 21.

En particulier, les branches 19 fonctionnent comme un ressort à lames et, pour obtenir un ressort souple tout en maitrisant les contraintes maximales, c'est la longueur de la branche 19 qui est importante. Avec l'inclinaison, une composante de traction pure se superpose à la flexion au niveau de la liaison entre la branche 19 et les bagues 5, 6, car la branche 19 se rallonge en cas de rotation de la bague extérieure 6.

Cette conformation en S permet de pouvoir incliner les branches 19 de façon importante, ce qui augmente le bras de levier BL et donc réduit les efforts dans les branches 19. En particulier, pour une conception à trois branches 19, l'angle INCb peut avantageusement être compris entre 80° et 100°, par exemple en étant de l'ordre de 90°.

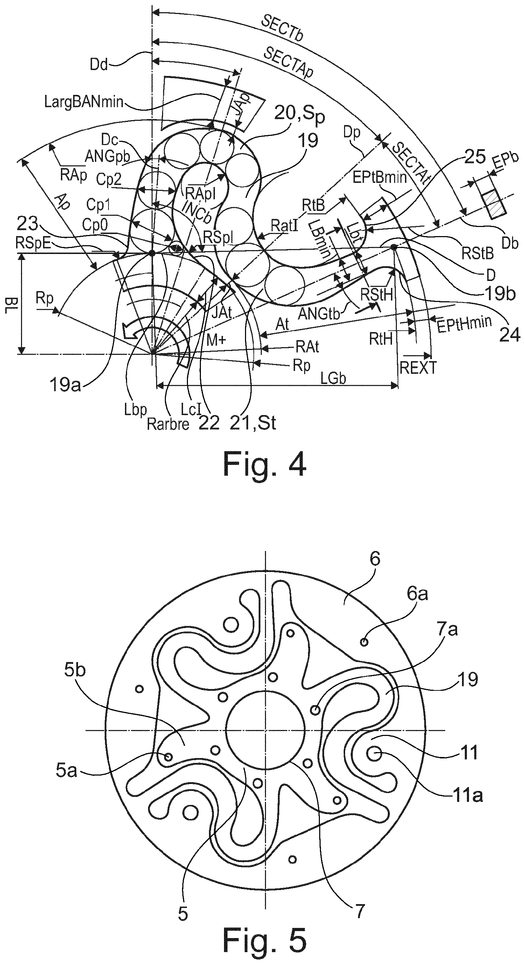

Par ailleurs, une branche 19 en S peut présenter une épaisseur EPb importante, par exemple de l'ordre de 4 mm, et subir des efforts réduits, de sorte à pouvoir limiter son flambement et donc ne pas contraindre le sens de rotation de fonctionnement du corps d'épreuve. En relation avec la figure 5, les branches 19 sont affinées par rapport à la réalisation des figures 1 à 4 afin d'augmenter le débattement angulaire des bagues 5, 6 sous couple.

De façon avantageuse, la longueur de branche LGb de chacune des branches 19 mesurée entre les extrémités intérieure 19a et extérieure 19b peut être supérieure, notamment supérieure à 120%, de la différence entre le rayon de tête RtH passant par l'extrémité extérieure 19b et le rayon de pied Rp passant par l'extrémité intérieure 19a.

Par ailleurs, pour maximiser la longueur de branches 19, le rayon extérieur REXT de la bague extérieure 6 doit être le plus grand possible dans l'encombrement disponible, et le rayon de tête RtH doit être le plus proche possible dudit diamètre rayon REXT tout en gardant une section minimale entre la tête de branche 19 et ledit rayon extérieur. Selon une réalisation, la compacité radiale du corps d'épreuve peut être telle que : 1,05 < REXT/RtH < 1,15.

Chacune des branches 19 s'étend sur un secteur angulaire de branche SECTb entre la direction diamétrale D_{d} et une direction diamétrale D_{b} passant par l'extrémité extérieure 19b, ledit secteur angulaire de branche étant compris entre 50° et 70°.

Selon la réalisation représentée, les coudes 20, 21 présentent un rayon de courbure RApI, RAtI, le rayon de courbure RApI du coude 20 de la section de pied Sₚ étant inférieur au rayon de courbure RAtl du coude 21 de la section de tête Sc.

En outre, la section de pied Sₚ s'étend sur un secteur angulaire de pied SECTAp entre la direction diamétrale D_{d} et une direction diamétrale Dₚ passant par le centre du cercle défini par le rayon de courbure RAtl du coude 21 de la section de tête Sₜ, la section de tête Sₜ s'étendant sur un secteur angulaire de tête SECTAt entre la direction diamétrale Dₚ et la direction diamétrale D_{b} passant par l'extrémité extérieure 19b, ledit secteur angulaire de tête étant inférieur audit secteur angulaire de pied.

Par ailleurs, l'amplitude radiale Ap de la section de pied Sₚ suivant le rayon RAp dans lequel le sommet du coude 20 est inscrit peut-être maximisée, notamment en prévoyant un jeu JAp réduit entre ledit coude et la bague extérieure 6.

En relation avec les figures, chacune des branches 19 présente :
- un pied s'étendant en largeur Lbp autour de l'extrémité intérieure 19a, ledit pied se raccordant à la bague intérieure 5 par deux portées de pied respectivement amont 22 et aval 23 suivant le sens de rotation ; et
- une tête s'étendant en largeur Lbt autour de l'extrémité extérieure 19b, ladite tête se raccordant à la bague extérieure 6 par deux portées de tête respectivement amont 24 et aval 25 suivant le sens de rotation.

Outre l'inclinaison des branches 19, les têtes et/ou les pieds peuvent être raccordés de façon asymétrique à la bague 5, 6 correspondante. En particulier, comme pour l'inclinaison, l'asymétrie est possible car il y a qu'un sens de rotation dans lequel le couple doit être transmis.

En pied de branche et en tête de branche, nous avons typiquement des concentrations des contraintes à cause de la part de flexion des branches 19, qui peuvent être lissées grâce à l'asymétrie qui est générée par un décalage radial du rayon de sortie de part et d'autre des pieds et des têtes.

En particulier, la portée de tête amont 24 est inscrite dans un rayon RtH qui est supérieur à un rayon RtB dans lequel est inscrite la portée de tête aval 25, l'extrémité extérieure 19b de la branche 19 étant disposée selon le rayon RtH en définissant une épaisseur minimale respectivement EPtHmin et EPtBmin au niveau de respectivement la portée de tête amont 24 et la portée de tête aval 25. De façon avantageuse, l'épaisseur EPtHmin est inférieure à l'épaisseur EPtBmin pour maximiser la l'amplitude At entre le sommet du coude 21 et l'extrémité extérieure 19b.

Par ailleurs, les portées de tête amont 24 et aval 25 s'étendent chacune suivant un rayon RStH, RStB, les portées de pied amont 22 et aval 23 s'étendant chacune suivant un rayon RSpI, RSpE. En relation avec la figure 4, le rayon RSpI est supérieur au rayon RSpE, les rayons RStH et RStB étant de valeur analogue.

De façon avantageuse, la largeur des branches 19 peut ne pas être constante, notamment en étant évolutive, afin de pouvoir harmoniser les contraintes au sein desdites branches, notamment en relation avec les contraintes de flexion et de traction qu'elles subissent.

En relation avec la figure 4, chacune des branches 19 présente une portion de raccordement avec la bague extérieure 6, ladite portion ayant une face aval s'étendant suivant une direction radiale et une face amont formant un angle ANGtb avec ladite direction radiale, dans un souci de réduction des contraintes, en définissant une largeur de branche 19 minimale Lbmin.

Par ailleurs, chacune des branches 19 s'étend depuis le pied dans une enveloppe formée par une superposition de cercles comprenant un premier cercle de diamètre Cp1 tangent à l'extrémité intérieure 19a et un deuxième cercle de diamètre Cp2, ledit diamètre Cp1 étant supérieur au diamètre Cp2.

En outre, la direction D_{c} passant par les centres des cercles de diamètre Cp1 et Cp2 est inclinée d'un angle ANGpb par rapport à la direction diamétrale D_{d}, par exemple d'un angle de +/- 5° afin de pouvoir réaliser les branches 19 avec un premier cercle de diamètre Cp1 important dans un souci de réduction des contraintes.

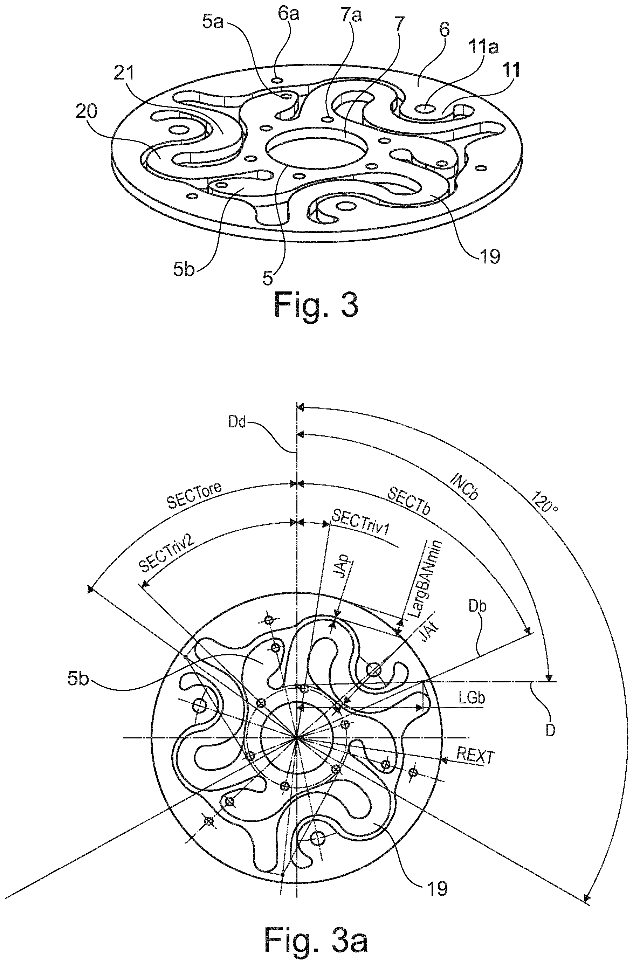

En relation avec la figure 3a, trois branches 19 sont disposées chacune sur un secteur angulaire SECTb, lesdites branches étant espacées deux à deux d'un secteur angulaire SECTore qui est complémentaire à 120° de l'angle SECTb.

Dans les modes de réalisations représentés, la bague intérieure 5 présente trois oreilles 5b qui s'étendent entre les bagues 5, 6 dans le secteur angulaire SECTore, chacune desdites oreilles présentant un orifice 5a de fixation et les orifices de fixation 6a étant également disposés dans les secteurs angulaires SECTore.

Chacun des lobes 11 est disposé dans un secteur angulaire SECTb de branche 19, ledit lobe s'étendant à l'intérieur du coude 21 de la section de tête Sc. En particulier, le lobe 11 présente un rayon de courbure analogue au rayon de courbure RAtI du coude 21 de sorte à former un jeu JAp réduit avec ledit coude.

Cette réalisation permet de dégager de l'encombrement et, dans cette position, il n'y a que de très faibles déformations sous charge et ainsi le mouvement relatif dans le jeu JAp est réduit au minimum, évitant des phénomènes d'usure.

Dans le mode de réalisation représenté, le jeu JAp entre la bague extérieure 6 et la branche 19 est sensiblement constant depuis le lobe 11 jusqu'au coude 20, de sorte à définir une largeur LargBANmin de la bague 6 qui est suffisante pour limiter sa déformation en regard dudit coude.

Par ailleurs, le jeu JAt entre le coude 21 et la bague intérieure 5, c'est-à-dire la différence entre le rayon RAt dans lequel le coude 21 est circonscrit et le rayon Rp de la bague intérieure 5 en regard, est également réduit tout en conservant une épaisseur Lcl, c'est-à-dire la différence entre le rayon Rp et le rayon Rarbre du premier organe 1, qui est suffisante pour la résistance de ladite bague notamment en assurant la rigidité de l'encastrement du pied de branche 19.

En relation avec la figure 3a, le bord de l'alésage 7 de la bague intérieure 5 est pourvu de trois jeux de deux orifices complémentaires 7a permettant le rivetage de la noix 8 au moyen des rivets 10, lesdits jeux étant espacés de 120°.

Dans la mesure où la bague intérieure 5 est relativement souple comparé aux branches 19, elle participe à la souplesse du corps d'épreuve en pouvant induire des micromouvements entre la noix 8 et ladite bague intérieure.

Pour éviter des sur-contraintes au niveau du rivetage, le premier rivet 10 d'un jeu est positionné dans un secteur où ces possibles mouvements sont les plus faibles, à savoir proche d'un pied de branche 19, notamment sur un secteur angulaire SECTriv1 inférieur à 15° avec la direction diamétrale D_{d}.

Le deuxième rivet 10 d'un jeu peut être positionné dans un secteur angulaire SECTriv2 compris dans le secteur angulaire SECTore, notamment en étant de l'ordre de 45° par rapport à la direction diamétrale D_{d}.

## Revendications

1. Système de détermination d'un couple appliqué entre deux organes tournants (1, 2) dans un sens autour d'un axe géométrique de rotation (R), ledit système comprenant :
- un corps d'épreuve présentant une bague intérieure (5) solidaire en rotation de moyens d'accouplement dudit corps d'épreuve à un premier des organes (1), et une bague extérieure (6) s'étendant autour de la bague intérieure (5) en présentant des moyens d'accouplement dudit corps d'épreuve au deuxième des organes (2), lesdites bagues étant reliées de façon concentrique autour de l'axe (R) par une structure déformable qui est agencée pour transmettre le couple entre les organes (1, 2) tout en autorisant un débattement angulaire entre lesdites bagues en fonction du couple appliqué entre lesdits organes ;
- un dispositif de détermination d'un angle entre les bagues (5, 6) qui est fonction du couple appliqué ;
ledit système étant **caractérisé en ce que** la structure déformable comprend un ensemble de branches (19) réparties angulairement entre les bagues (5, 6), chacune desdites branches s'étendant suivant une direction D entre une extrémité intérieure (19a) et une extrémité extérieure (19b), ladite direction D formant un angle INCb avec la direction diamétrale D_{d} passant par ladite extrémité intérieure, chacune desdites branches présentant une section de pied (Sₚ) s'étendant depuis l'extrémité intérieure (19a) jusqu'à la direction D et une section de tête (Sc) s'étendant depuis ladite direction D jusqu'à l'extrémité extérieure (19b), lesdites sections formant un coude respectivement convexe (20) pour la section de pied (Sₚ) et concave (21) pour la section de tête (Sₜ).

2. Système de détermination d'un couple selon la revendication 1, **caractérisé en ce que** l'angle INCb est compris entre 80° et 100°.

3. Système de détermination d'un couple selon la revendication 1 ou 2, **caractérisé en ce que** chacune des branches (19) s'étend sur un secteur angulaire de branche SECTb entre la direction diamétrale D_{d} et une direction diamétrale D_{b} passant par l'extrémité extérieure (19b), ledit secteur angulaire de branche étant compris entre 50° et 70°.

4. Système de détermination d'un couple selon l'une quelconque des revendications 1 à 3, **caractérisé en ce que** les coudes (20, 21) présentent un rayon de courbure RApI, RAtI, le rayon de courbure RApI du coude (20) de la section de pied (Sₚ) étant inférieur au rayon de courbure RAtl du coude (21) de la section de tête (Sₜ).

5. Système de détermination d'un couple selon l'une quelconque des revendications 1 à 4, **caractérisé en ce que** la section de pied (Sₚ) s'étend sur un secteur angulaire de pied SECTAp entre la direction diamétrale D_{d} et une direction diamétrale Dₚ passant par le centre du cercle défini par un rayon de courbure RAtl du coude (21) de la section de tête (Sₜ), ladite section de tête s'étendant sur un secteur angulaire de tête SECTAt entre la direction diamétrale Dₚ et une direction diamétrale D_{b} passant par l'extrémité extérieure (19b), ledit secteur angulaire de tête étant inférieur audit secteur angulaire de pied.

6. Système de détermination d'un couple selon l'une quelconque des revendications 1 à 5, **caractérisé en ce que** la longueur de branche LGb de chacune des branches (19) est supérieure à 120% de la différence entre le rayon de tête RtH passant par l'extrémité extérieure (19b) et le rayon de pied Rp passant par l'extrémité intérieure (19a).

7. Système de détermination d'un couple selon l'une quelconque des revendications 1 à 6, **caractérisé en ce que** chacune des branches (19) présente un pied s'étendant sur une largeur Lbp autour de l'extrémité intérieure (19a), ledit pied se raccordant à la bague intérieure (5) par deux portées de pied respectivement amont (22) et aval (23) suivant le sens de rotation.

8. Système de détermination d'un couple selon la revendication 7, **caractérisé en ce que** chacune des branches (19) s'étend depuis le pied dans une enveloppe formée par une superposition de cercles comprenant un premier cercle de diamètre Cp1 tangent à l'extrémité intérieure (19a) et un deuxième cercle de diamètre Cp2, ledit diamètre Cp1 étant supérieur au diamètre Cp2.

9. Système de détermination d'un couple selon la revendication 8, **caractérisé en ce que** la direction D_{c} passant par les centres des cercles de diamètre Cp1 et Cp2 est inclinée d'un angle ANGpb par rapport à la direction diamétrale D_{d}.

10. Système de détermination d'un couple selon l'une quelconque des revendications 1 à 9, **caractérisé en ce que** chacune des branches (19) présente une tête s'étendant sur une largeur Lbt autour de l'extrémité extérieure (19b), ladite tête se raccordant à la bague extérieure (6) par deux portées de tête respectivement amont (24) et aval (25) suivant le sens de rotation.

11. Système de détermination d'un couple selon la revendication 10, **caractérisé en ce que** la portée de tête amont (24) est inscrite dans un rayon RtH qui est supérieur à un rayon RtB dans lequel est inscrite la portée de tête aval (25).

12. Système de détermination d'un couple selon l'une des revendications 10 ou 11, **caractérisé en ce que** chacune des branches (19) présente une portion de raccordement avec la bague extérieure (6), ladite portion ayant une face aval s'étendant suivant une direction radiale et une face amont formant un angle ANGtb avec ladite direction radiale.

13. Système de détermination d'un couple selon l'une quelconque des revendications 1 à 12, **caractérisé en ce que** la bague extérieure (6) présente au moins un lobe radial (11) qui s'étend à l'intérieur du coude (21) de la section de tête (Sₜ), ledit lobe (11) étant équipé d'un moyen (11a) de fixation de la bague extérieure (6) sur le deuxième organe (2).

14. Système de détermination d'un couple selon la revendication 13, **caractérisé en ce que** le lobe (11) présente un rayon de courbure analogue à un rayon de courbure RAtl du coude (21) de la section de tête (Sc) de sorte à former un jeu JAp réduit avec ledit coude.

15. Système de détermination d'un couple selon l'une quelconque des revendications 1 à 14, **caractérisé en ce que** le dispositif de détermination comprend :
- un codeur réalisé en équipant chacune des bagues (5, 6) d'un anneau (13, 14) portant une piste magnétique respectivement intérieure (13a) et extérieure (14a) qui est apte à émettre un signal périodique représentatif du déplacement en rotation de la bague (5, 6) correspondante ;
- un capteur comprenant un premier (15) - respectivement un deuxième (16) - motif d'éléments sensibles disposé à distance de lecture de la piste intérieure (13a) - respectivement de la piste extérieure (14a) - pour former un signal représentatif de la position angulaire de l'anneau (13, 14) correspondant ;
- un dispositif de comparaison des signaux délivrés par le capteur, ledit dispositif étant apte à déterminer un angle entre les bagues (5, 6) qui est fonction du couple appliqué.
